# EUROPÄISCHE PATENTSCHRIFT

(11) **EP 3 176 430 B1**
(45) Veröffentlichungstag und Bekanntmachung des Hinweises auf die Patenterteilung: **11.07.2018**
(21) Anmeldenummer: 16201490.6
(22) Anmeldetag: 30.11.2016
(51) Int. Cl.: F03D 17/00, F03D 7/02, F03D 7/04

(54) **VERFAHREN ZUM ÜBERWACHEN EINER WINDENERGIEANLAGE**
METHOD FOR MONITORING A WIND FARM
PROCÉDÉ DE SURVEILLANCE D'UNE ÉOLIENNE

(30) Priorität: 04.12.2015 DE 102015015596
(43) Veröffentlichungstag der Anmeldung: 07.06.2017
(73) Patentinhaber: Senvion GmbH, 22297 Hamburg (DE)
(72) Erfinder: Mittelmeier, Niko, 22303 Hamburg (DE); Geisler, Jens, 24768 Rendsburg (DE); Rautenstrauch, Arne, 24943 Flensburg (DE)
(74) Vertreter: Glawe, Delfs, Moll

(56) Entgegenhaltungen:
- EP-A2- 2 275 674
- WO-A2-2013/041192

## Beschreibung

Die Erfindung betrifft ein Verfahren zum Überwachen des Betriebs einer Windenergieanlage, die einen von einem Windrotor mit mindestens einem Rotorblatt, dessen Pitchwinkel verstellbar ist, angetriebenen Generator zur Abgabe von elektrischer Leistung aufweist, wobei die Windenergieanlage mit einem von extern vorgebbaren Leistungsreduktionssollwert betrieben werden kann.

Mit steigender Bedeutung von Windenergieanlagen bei der Erzeugung elektrischer Energie in einem Stromnetz steigen auch die Anforderungen an die Windenergieanlagen, ihren Beitrag zur Sicherung der Stabilität des Stromnetzes zu leisten. Beiträge zur Sicherung der Stabilität des Netzes bestehen unter anderem in der Bereitstellung von Blindleistung, dem Bereithalten von Reserveleistung aber auch darin, gegebenenfalls auf Zuruf die Leistungseinspeisung zu drosseln oder zumindest auf einen vorgebbaren Wert reduzieren zu können. Letzteres, nämlich das Drosseln auf Basis eines von Extern vorgegebenen Reduktionswert, bereitet bei Windenergieanlagen zwar keine grundsätzlichen Schwierigkeiten, jedoch stört es den an sich auf maximale Ausnutzung der Windkraft gerichteten Betrieb der Windenergieanlagen. Dennoch ist die Fähigkeit zur Reduktion der Leistungseinspeisung von Bedeutung.

Denn es sind im praktischen Betrieb von Verteilungs- oder Übertragungsnetzen Situationen möglich, bei denen das Leistungsangebot die Nachfrage nach Leistung übersteigt. In solch einem Fall kommt es zu Frequenzsteigerungen im Netz. Zur Wahrung der Netzstabilität müssen die Netzbetreiber die Erzeugung elektrischer Leistung beschränken. In der Praxis geschieht dies dadurch, dass unter anderen in Windparks entsprechende Beschränkungssignale übermittelt werden. Damit wird den Windparks ein Sollwert vorgegeben, den sie bei der Leistungseinspeisung nicht mehr überschreiten dürfen. Der Windpark speist dann nur mit reduzierter Leistung ein. In der Regel bezieht sich die Vorgabe eines solchen reduzierten Sollwerts auf die Nennleistung des Windparks (z.B. wird als Reduktionswert 80% der Nennleistung vorgegeben) oder auf einen Absolutwert (z.B. max. 75 MW bei einem Windpark mit 100 MW installierter Leistung). In solch einem Fall greift die verordnete Reduktion dann, wenn der Wind so stark wird, dass die im Windpark erzeugte Leistung den vorgegebenen Reduktionssollwert zu überschreiten droht. Ist der Wind hingegen schwach, so ist die vorgegebene Beschränkung für die betreffende Windenergieanlage des betreffenden Windpark ohne Wirkung. Grundsätzlich ist es so, dass bei einer Leistungsreduktion durch den Betreiber des Übertragungsnetzes es dazu kommen kann, dass für den wegen der Leistungsreduktion nicht erzielten Ertrag Kompensationszahlungen zu leisten sind. Die Beteiligten haben daher ein Interesse daran zu wissen, ob eine Reduktionsvorgabe tatsächlich zu einer Reduktion von der Leistungsproduktion einer Windenergieanlage des Windparks führt, oder ob sie - mangels hinreichend starkem Wind - wirkungslos bliebe.

Im Stand der Technik sind dazu verschiedene Ansätze diskutiert worden. Bei dem ersten Ansatz wird auf das Reduktionssignal abgestellt, welches die Windenergieanlage erhält, um ihr das Vorhandensein einer Reduktion zu signalisieren. Allerdings belegt das Vorhandensein dieses Signals noch nicht, dass - unter Berücksichtigung der tatsächlichen Bedingungen - tatsächlich eine wirksame Reduktion stattgefunden hat. War der Wind nur schwach, so kann alleine aufgrund des Vorhandenseins des Signals fälschlicherweise auf eine Ertragseinbuße geschlossen werden. Das Ergebnis wäre somit fehlerhaft. Alternativ ist vorgeschlagen worden, über eine Windmessung und vorbekannten Leistungskennlinien der Windenergieanlage zu bestimmen, welche Leistung die Windenergieanlage hätte produzieren können bei dem gemessenen Wind, und dies mit der reduzierten Leistungseinspeisung zu vergleichen (WO 2013/041192 A2). Derartige Verfahren, die auf ein an der Gondel der Windenergieanlage angeordnetes Anemometer zur Bestimmung der Windgeschwindigkeit setzen, sind jedoch wegen der Beeinflussung der Windgeschwindigkeitsmessung durch den laufenden Windrotor zu ungenau.

Es besteht daher das Bedürfnis, ein Verfahren der eingangs genannten Art dahingehend zu verbessern, dass es genauer ist und mit höherer Verlässlichkeit anzeigt, ob eine vorgegebene Reduktion tatsächlich wirksam wurde.

Die erfindungsmäßige Lösung liegt in den Merkmalen der unabhängigen Ansprüche. Vorteilhafte Weiterbildungen sind Gegenstand der abhängigen Ansprüche.

Bei einem Verfahren zum Überwachen des Betriebs einer Windenergieanlage, die einen von einem Windrotor mit mindestens einem Rotorblatt, dessen Pitchwinkel verstellbar ist, angetriebenen Generator zur Abgabe elektrischer Leistung aufweist, wobei die Windenergieanlage mit einem vorgebbaren Leistungsreduktionssollwert betrieben werden kann, ist erfindungsgemäß vorgesehen ein Bestimmen, ob die Windenergieanlage reduziert betrieben wird oder nicht, umfassend die Schritte: Bestimmen, ob eine Veränderung eines Windrotorbetriebsparameters, ausgewählt aus einer Gruppe bestehend aus einer Drehzahl des Windrotors und dem Pitchwinkel, gegenüber einem Referenzwert vorliegt, Bestimmen, ob die Windenergieanlage im Teillastbetrieb läuft, Prüfen, ob ein Leistungsreduktionssollwert vorgegeben ist, und Ausgeben eines Signals für eine wirksame Reduktion dann, wenn alle vorgenannten Bedingungen erfüllt sind.

Nachfolgend seien zuerst einige verwendete Begriffe erläutert:
Unter einem "vorgebbaren Leistungsreduktionssollwert" wird ein i.d.R. von extern vorgegebener Leistungswert verstanden, auf den die Leistungsabgabe der Windenergieanlage zu reduzieren ist. Meist wird dies eine auf die Nennleistung bezogene Vorgabe sein (z.B. 90% der Nennleistung), es kann aber auch eine andere Vorgabeart vorgesehen sein, beispielsweise als absoluter Leistungswert (z.B. 2,5 MW bei einer 3 MW-Windenergieanlage).

Unter Teillastbetrieb wird ein solcher leistungserzeugender Betrieb der Windenergieanlage verstanden, der nicht ein Betrieb mit Nennleistung (Volllastbetrieb) ist. Nicht zum Teillastbetrieb gehört ein Stillstand beziehungsweise leistungsloser Betrieb der Windenergieanlage ohne Abgabe von elektrischer Wirkleistung.

Unter einer "wirksamen" Reduktion wird verstanden, wenn eine Windenergieanlage aufgrund einer Vorgabe weniger Leistung erzeugt und abgibt, als sie bei den vorherrschenden Windbedingungen an sich könnte.

Die Erfindung fußt auf dem Gedanken, durch eine Kombination von Windrotorbetriebsparameterüberwachung einerseits und Fallunterscheidung hinsichtlich der Betriebsart und des Vorhandenseins eines Leistungsreduktionssollwerts andererseits eine Klassifikation dahingehend vorzunehmen, ob eine tatsächliche, das heißt wirksame Reduktion stattfindet. Nachfolgende Erläuterung bezieht sich auf den Pitchwinkel als Windrotorbetriebsparameter - für die Drehzahl des Windrotors gilt sie sinngemäß. Die Erfindung macht sich die Erkenntnis zu Nutze, dass im Teillastbetrieb der Pitchwinkel an sich unverändert bleibt gegenüber einem für den Teillastbetrieb vorgesehenen Referenzwert. Der für die Teillast vorgegebene Referenzwert wird auch als sogenannter Nullwinkel bezeichnet. Er kann tatsächlich den Wert 0 Grad definitionsgemäß betragen, kann aber auch - je nach vorhandener Ausstattung - ein von Null verschiedener Referenzwert sein. Es wird also letztlich unter Ausnutzung von vorhandenen Signalen über das Betriebsverhalten der Windenergieanlage ein Vergleich zwischen der Pitchaktivität und dem Laststatus durchgeführt. Anders ausgedrückt wird die bekannte Pitchaktivität dahingehend gewichtet, ob sie unter Berücksichtigung des Lastzustands basiert auf einem Reduktionssollwert oder eben nicht. Mithin wirkt die Erfindung wie eine lastabhängige Pitchaktivitätswaage.

Vorzugsweise ist optional weiter vorgesehen ein zusätzliches Erfassen im Volllastbetrieb mit den Schritten: Bestimmen, ob ein Volllastbetrieb vorliegt, Prüfen ob der Leistungsreduktionssollwert anliegt, und Ausgeben des Signals für tatsächliche Reduktion auch dann, wenn beide vorgenannten Bedingungen erfüllt sind. Hiermit kann der Wirkungsbereich der Erfindung über den Teillastbetrieb hinaus erweitert werden, sodass er auch den Volllastbetrieb umfasst. Somit wird im Ergebnis eine über den gesamten Betriebsbereich, sei es Teillast oder Volllast, hinweg gültige und effektive Methode bereitgestellt, das Wirksamwerden einer Reduktion zu erkennen.

Zweckmäßigerweise erfolgt die Unterscheidung zwischen Teillastbetrieb einerseits und Volllastbetrieb andererseits anhand eines einstellbaren Schwellwerts. Der Schwellwert liegt vorzugsweise im Bereich zwischen 92 und 97% der Nennleistung der Windenergieanlage. Eine derartige Wahl des Schwellwerts hat sich als betriebssicher und robust erwiesen, insbesondere im realen Betreib mit schwankenden Windbedingungen, als eine strikte Trennung anhand von 100% Leistung.

Gemäß einer bevorzugten Ausführungsform kann vorgesehen sein, dass Ausgangssignal zu inhibieren im Fall einer erkannten Störung. Hier liegt die Erkenntnis zugrunde, dass im Fall einer Einschränkung der Leistungsfähigkeit der Windenergieanlage, beispielsweise aufgrund von Einschränkungen des elektromechanischen Antriebsstrangs (z.B. Übertemperatur am Getriebe oder Generator) es zwar auch zu einer Reduktion der Leistungsabgabe kommen kann, dieser aber auf interne Ursachen zurückzuführen ist. Es handelt sich hierbei somit also nicht um den Fall einer von außen, insbesondere vom Netzbetreiber vorgegebenen Leistungsreduktion. Es ist daher zweckmäßig zwischen einer solchen externen und einer auf internen Ursachen beruhenden Leistungsreduktion zu unterscheiden. Dies gelingt durch das besagte Inhibieren. Es versteht sich, dass Inhibieren keine vollständige Unterdrückung zu bedeuten braucht, sondern dass hierunter auch ein Modifizieren des Ausgangssignals zu verstehen sein kann. Es bedeutet, dass ein Ausgangssignal für den Reduktionsbetrieb durchaus ausgegeben wird, aber zusätzlich signalisiert wird, dass dies auf einer internen Ursache beruht.

Als Referenzwert wird vorzugsweise der Pitchsollwert für optimalen Betrieb verwendet. Indem auf den optimalen Betrieb als Referenz abgestellt wird, kann jedwede Art von Leistungseinschränkung sicher erkannt werden. Zweckmäßigerweise geschieht dies dadurch, dass ein Sollwert für den optimalen Betrieb anhand einer Kennlinie für den höchsten Leistungsertrag bestimmt ist. Derartige Kennlinien können mittels einem Kennlinienglied, einer Formel oder auf andere Weise, wie insbesondere eine Lookup-Tabelle definiert sein. Es braucht aber keineswegs zwingend stets der optimale Betrieb zu sein. Bei einer bevorzugten Ausführungsform wird als Referenzwert eine Kennlinie für einen lärmarmen Betrieb herangezogen. Die Windenergieanlage produziert dann zwar weniger Leistung, als sie an sich bei optimaler Einstellung bei den gegenwärtigen Windbedingungen produzieren könnte, jedoch geschieht dies unter dem Aspekt einer verringerten Lärmemission. Die hierdurch resultierende verminderte Leistungseinspeisung beruht jedoch nicht auf Vorgabe des Netzbetreibers von extern. Indem dieser lärmarme Betrieb als Referenzwert herangezogen wird, wird mit dem erfindungsgemäßen Verfahren erreicht, dass folgerichtig dies nicht als eine tatsächliche Reduktion angesehen wird. Die läge erst dann vor, wenn noch unterhalb des durch den lärmarmen Betrieb vorgegeben Leistungsniveaus eingespeist wird.

Der Referenzwert braucht keineswegs konstant zu sein, sondern kann über den Betriebsbereich oder über die Zeit hinweg modifiziert sein. Besonders zweckmäßig ist ein Modifizieren des Sollwerts durch eine Feinpitch-Regelung, welche die Blattverstellung der Rotorblätter in kleinen Schritten und vorzugsweise mit hoher Dynamik mit jeweils optimalen Betriebsbedingen anpasst, gegebenenfalls auch zyklisch. Indem der durch die Feinpitch-Regelung modifizierte Sollwert als Referenzwert herangezogen wird, kann auch für diese Fälle eine präzise Erkennung eines effektiven Reduktionsbetriebs erfolgen.

Das erfindungsgemäße Verfahren hat weiter den Vorteil, dass es weitgehend ohne zusätzliche Hardware auskommt und wenig aufwendig in der Implementation ist. Es eignet sich daher auch zur Ausführung im Live-Betrieb, das bedeutet, dass während des laufenden Betriebs der Windenergieanlage erfasst werden kann, ob wirksam reduziert wird oder nicht. Andererseits ist das erfindungsgemäße Verfahren aber darauf nicht beschränkt, sondern es kann auch nachträglich ausgeführt werden, auf Basis von aufgezeichneten Daten. Die für das erfindungsgemäße Verfahren benötigten Daten werden üblicherweise ohnehin aufgezeichnet und stehen auch dezentral, insbesondere bei Überwachungseinrichtungen (bspw. SCADA) zur Verfügung. Das erfindungsgemäße Verfahren eignet sich damit auch für eine Offline-Auswertung, die sogar dezentral erfolgen kann.

Die Erfindung bezieht sich auch auf eine entsprechend ausgerüstete Windenergieanlage beziehungsweise einen entsprechend ausgerüsteten Windpark, versehen mit Einrichtungen zur Ausführung des Verfahrens. Zur näheren Beschreibung wird auf vorstehende Ausführungen verwiesen.

Die Erfindung wird nachfolgend mit Bezug auf die beigefügte Zeichnung näher erläutert, in der vorteilhafte Ausführungsformen dargestellt sind. Es zeigen:
- Fig. 1:: eine schematische Darstellung einer Windenergieanlage gemäß einem Ausführungsbeispiel der Erfindung;
- Fig. 2:: ein Windpark mit Windenergieanlage gemäß einer weiteren Ausführungsform;
- Fig. 3:: ein Ablaufdiagramm für das erfindungsgemäße Verfahren;
- Fig. 4:: eine schematische Ansicht für eine Auswerteinrichtung zur Ausführung des Verfahrens;
- Fig. 5:: Diagramme darstellend das Betriebsverhalten der Windenergieanlage;
- Fig. 6:: Diagramme darstellend die Funktionsweise des erfindungsgemäßen Verfahrens.

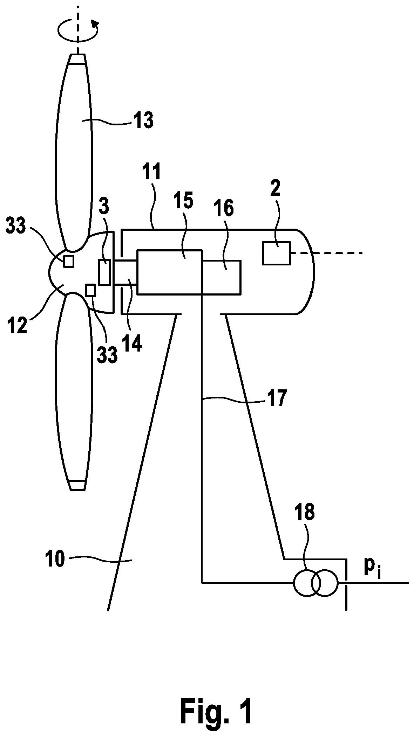

Bei einer in Fig. 1 gezeigten, in ihrer Gesamtheit mit der Bezugsziffer 1 bezeichneten Windenergieanlage ist ein Turm 10 vorgesehen, an dessen oberen Ende eine Gondel 11 in Azimutrichtung schwenkbar angeordnet ist. An einer Stirnseite der Gondel 11 ist ein Windrotor 12 mit mehreren hinsichtlich ihres Pitchwinkels θ verstellbaren Rotorblättern 13 angeordnet. Er treibt über eine Rotorwelle 14 einen Generator 15 an, der mit einem Umrichter 16 zusammenwirkt zur Erzeugung elektrischer Leistung, die über eine Anschlussleitung 17 zu einem am Fuß des Turms 10 angeordneten Anlagentransformator 18 geführt ist, und von diesem an ein Netz (Übertragungsnetz 99 oder ein parkinternes Netz 4) abgegeben wird. Der Betrieb der Windenergieanlage 1 wird kontrolliert von einer Betriebssteuerung 2, welche ebenfalls in der Gondel 11 angeordnet ist. Sie wirkt über nicht dargestellte Signalverbindungen mit einem Pitchsteuermodul 3 zusammen, welches in der Nabe des Windrotors 12 angeordnet ist und einen Pitchantrieb 33 betätigt, der zur Verstellung des Anstellwinkels θ der Rotorblätter 13 ausgeführt ist. Der Pitchantrieb 33 kann ein gemeinsamer Antrieb für die Rotorblätter 13 oder ein individueller Antrieb für jedes einzelnes Rotorblatt sein.

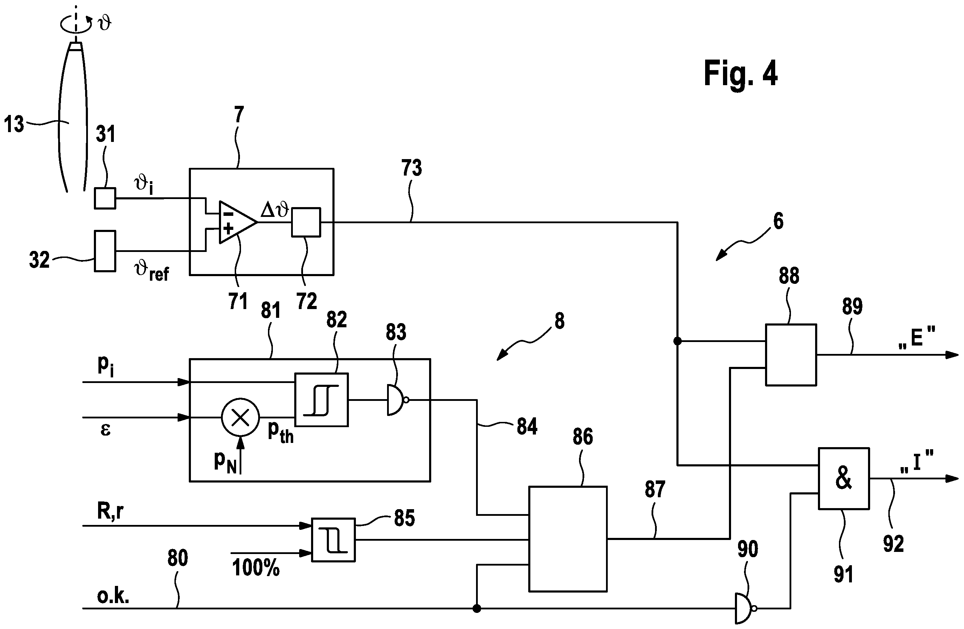

Das Pitchmodul 3 umfasst (s. auch Fig. 4) eine Einrichtung 31 zur Bestimmung eines aktuellen Pitchwinkels θ₁ und einen Eingang 32 für einen Referenzwert des Anstellwinkels θ_{ref}. Der Referenzwert θ_{ref} wird von der Betriebssteuerung 2 bereitgestellt und an das Pitchmodul 3 übergeben (i.d.R. über einen an der Rotornabe 12 angeordneten Drehübertrager, welcher aus Übersichtsgründen nicht dargestellt ist). Das Pitchmodul 3 ist dazu ausgebildet, den entsprechenden Pitchwinkel einzustellen unter Beachtung des aktuellen Pitchwinkels θᵢ.

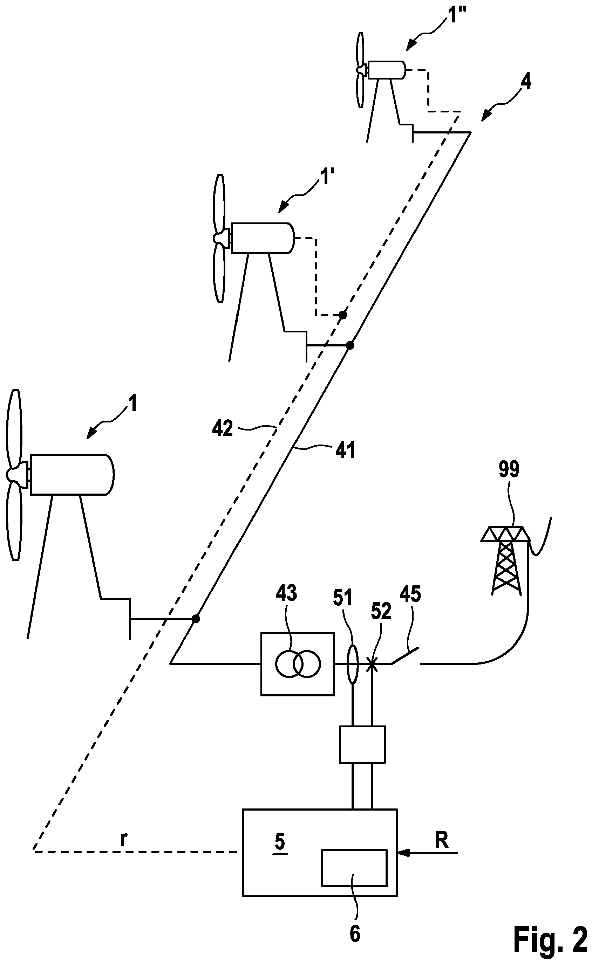

In Fig. 2 ist ein Windpark dargestellt, der mehrere Windenergieanlagen 1,1',1" umfasst. Sie sind entsprechend der in Fig. 1 beschriebenen Windenergieanlage ausgebildet. Sie sind angeschlossen an ein parkinternes Netz 4, welches ein Leistungsnetz 41 und ein Kommunikationsnetz 42 umfasst. Das Leistungsnetz 41 ist über einen Parktransformator 43 und einem Trennschalter 45 an ein Übertragungsnetz 99 angeschlossen, welches unter der Aufsicht eines Netzbetreibers steht. Der Park umfasst ferner einen Parkmaster 5, der ebenfalls an das Kommunikationsnetz 42 angeschlossen ist. Dem Parkmaster zugeordnet sind Messstellen 51, 52 für in das Netz eingespeisten Strom und die Spannung, zur Ermittlung der in das Netz 99 eingespeisten Leistung. Ferner ist an dem Parkmaster ein Eingang für eine Reduktionsvorgabe R seitens einer übergeordneten Instanz, insbesondere eines Netzbetreibers vorgesehen. Der Parkmaster ermittelt aus den Messwerten für die in das Netz 9 abgegebene Leistung und der Vorgabe am Eingang R Einzelreduktionsvorgaben r für die einzelnen Windenergieanlagen 1, die über das Kommunikationsnetz 42 an die Betriebssteuerung 2 der einzelnen Windenergieanlagen 1 angelegt werden.

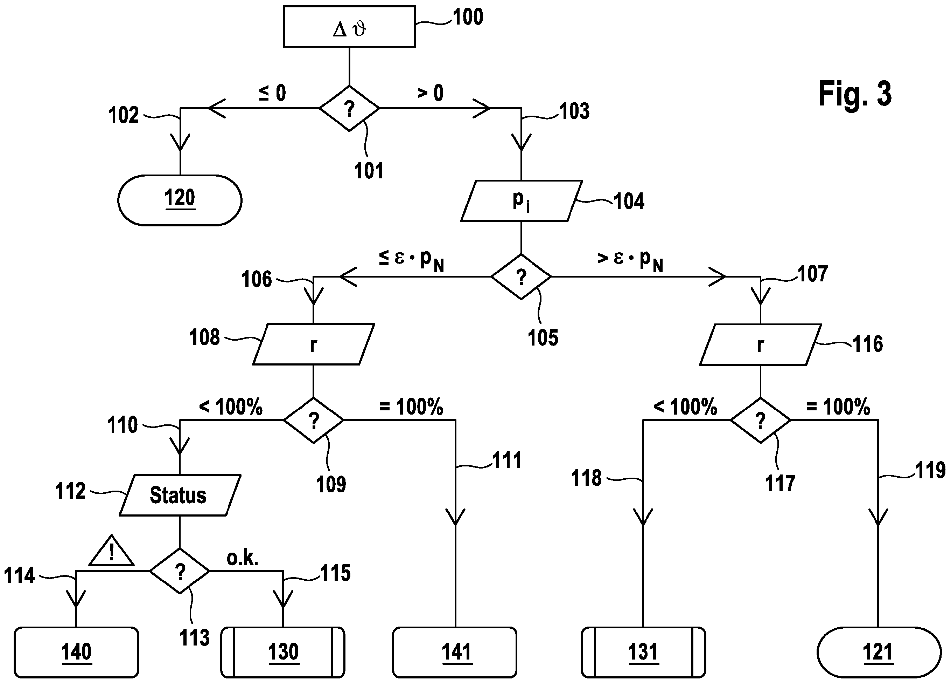

Die Funktionsweise des erfindungsgemäßen Verfahrens wird nunmehr unter Bezugnahme der Fig. 3 näher erläutert.

In einem ersten Schritt 100 wird eine Abweichung des Pitchwinkels ermittelt durch Vergleich des tatsächlichen Pitchwinkels mit einem Referenzwert. Besteht keine Abweichung (oder eine negative), so liegt keine reduzierende Pitchaktivität vor. Dies wird in der Verzweigungsstelle 101 ermittelt und es wird verzweigt zu Block 102 mit dem Ergebnis 120, dass keine wirksame Reduzierung vorliegt. Andernfalls, das heißt es liegt Pitchaktivität vor mit einer positiven Abweichung, wird in den Pfad 103 verzweigt. Im nächsten Block 104 wird die von der Windenergieanlage abgegebene Wirkleistung Pᵢ abgerufen. Sie wird mit einem einstellbaren Schwellwertfaktor ε multipliziert und es wird an einer Entscheidungsstelle 105 bestimmt, ob die abgegebene Wirkleistung Pᵢ unterhalb (oder gleich) des durch den Faktor ε bestimmten Schwellwerts oder oberhalb davon liegt. Liegt er unterhalb, so bedeutet dies, dass die Windenergieanlage 1 nicht ihre volle Leistung produziert und es wird in den Pfad 106 verzweigt. Es handelt sich hierbei um einen Teillastpfad. In einem nächsten Schritt wird in der Entscheidungsstelle 108 geprüft, ob einer Windenergieanlage ein Vorgabewert insbesondere von einer übergeordneten Instanz (wie dem Parkmaster mit dem Wert r oder vom Netzbetreiber mit dem Wert R) vorliegt. Dies wird in der Entscheidungsstelle 109 bewertet. Liegt er unter 100%, so besteht eine Reduktionsvorgabe für die einzelnen Windenergieanlage 1. Es folgt dann eine Verzweigung in den Pfad 110 und es wird im nächsten Block 112 der Betriebsstatus der Windenergieanlage 1 abgefragt. Im Entscheidungsblock 113 wird dann bestimmt, ob in der Windenergieanlage 1 ein Störungs- oder Warnungszustand vorliegt, der einen unbeschränkten Betrieb unmöglich macht. Ist das der Fall, so wird in Pfad 114 verzweigt. Dies bedeutet, dass eine wirksame Reduzierung vorliegt, sie jedoch auf einer internen Ursache der Windenergieanlage 1 beruht. Es wird dann das Signal "I" in Block 140 gesetzt. Liegt hingegen kein solcher Status vor, das heißt die Windenergieanlage wäre an sich zu einer unbeschränkten Leistungserzeugung befähigt (sie ist "o.k."), so liegt eine wirksame Reduzierung vor, und es wird in Pfad 115 verzweigt. In dem Block 130 wird das Signal für eine wirksame, externe Reduzierung "E" gesetzt. Erfolgt an der Entscheidungsstelle 109 ein Verzweigen in den Pfad 111, so bedeutet dies, dass kein Reduktionssignal von übergeordneter Instanz angelegt ist. Es wird dann in Block 141 das Signal "I" ausgegeben, wonach zwar eine Reduktion erfolgt, diese jedoch auf einer internen Ursache beruht.

Gemäß einer optionalen Variante kann auch das Verhalten im Volllastbetrieb in das erfindungsgemäße Verfahren einbezogen sein. Dies erfolgt, wenn an der Entscheidungsstelle 105 in den Pfad 107 für Volllast verzweigt wird. Es wird dann in dem Block 116 analog zu den Block 108 ein übergeordneter vorgegebener Reduktionswert abgefragt. In der Entscheidungsstelle 117 wird analog zu der Entscheidungsstelle 109 geprüft, inwieweit der Vorgabewert für die individuelle Windenergieanlage 1 unter 100% liegt oder nicht. Liegt er unter 100%, so erfolgt eine Verzweigung in Pfad 118; dies bedeutet, es liegt eine Reduktion vor die auf eine übergeordneten, das heißt externe Reduzierung beruht. Das entsprechende Ausgabesignal "E" wird gesetzt (131). Andernfalls wird in Pfad 119 verzweigt, dass bedeutet es liegt keine Reduzierung vor. Entsprechend wird in Block 121 kein Reduktionssignal gesetzt.

Auf diese Weise kann sowohl für den Teillastfall wie auch für den Volllastfall bestimmt werden, ob aufgrund von Vorgaben von Extern, insbesondere von einer übergeordneten Instanz wie einen Netzbetreiber eine Reduktion der Windenergieanlage 1 stattgefunden hat, die im Betrieb der Windenergieanlage 1 wirksam wurde.

Unter Bezugnahme auf Fig. 4 wird nunmehr eine Auswerteeinrichtung beschrieben, mit welcher das beschriebene Verfahren implementiert sein kann. Die Auswerteeinrichtung, welche in der Gesamtheit mit der Bezugsziffer 6 bezeichnet ist umfasst einen Pitchaktivitätsdetektor 7 sowie eine Lastwaage 8. Der Pitchaktivitätsdetektor 7 enthält Eingänge für den tatsächlichen Pitchwinkel θᵢ als Messwert von dem Aufnehmer 31 sowie an einem anderen Eingang das Signal für den Referenzwert θ_{ref} 32. Sie werden an einem Komparator 71 angelegt. Sind die Werte gleich, so wird kein Signal ausgegeben (dasselbe gilt, wenn der gemessene Winkel kleiner als die Referenz ist). Ist hingegen der gemessene Pitchwinkel größer als der Referenzwert, so gibt der Komparator 71 ein Signal aus. Es wird einem Signalformungsblock 72 zugeführt. Dieser ist dazu ausgebildet, eine Verbesserung der Signalqualität zu erreichen. In einer zweckmäßigen Ausführungsform handelt es sich hierbei um einen Moving-Average Filter, der beispielsweise einen Durchschnitt über die letzten 100 Messwerte bildet (oder über eine bestimmte vorgebbare Zeit, wie bspw. die letzte Minute oder die letzten 10 Minuten). Mit diesem Signalformungsfilter 72 werden Ausreißer eliminiert und es wird eine Verstetigung der Signalverarbeitung erreicht. An dem Ausgang 7 wird nunmehr ein Signal ausgegeben, ob der tatsächliche Pitchwinkel (kleiner ist) als der Referenzwert. Wenn dies der Fall ist, so liegt Pitchaktivität vor, und dies wird auf der Signalleitung 73 ausgegeben.

Die Lastwaage 8 umfasst als eine erste Komponente einen Lastdetektor 81. An ihn werden Eingänge für die tatsächliche von der Windenergieanlage 1 abgegebene Leistung Pᵢ wie für einen einstellbaren Schwellwertfaktor ε zur Unterscheidung von Volllast und Teillast-Betrieb angelegt. Aus dem Wert für den Schwellwertfaktor ε wird durch Multiplikation mit einem eingespeicherten Wert für die Nennleistung der jeweiligen Windenergieanlage 1 ein Schwellleistungswert Pₜₕ generiert, der einem Eingang eines Komparators 82 zugeführt ist. An einem anderen Eingang des Komparators 82 ist der Messwert für die tatsächlich erzeugte Leistung Pᵢ angelegt. Liegt die erzeugte Leistung unter den Schwellwert, so gibt der Komparator ein Nullsignal aus, welches nach Inversion in einem Inverter-Glied 83 zu einem positiven Signal umgewandelt ist. Damit liegt am Ausgang ein positives Signal dann an, wenn die Windenergieanlage 1 im Teillastbetrieb läuft. Dieses Signal wird über eine Signalleitung 84 an ein UND-Glied 86 angelegt. Dieses weist als weiteren Eingang einen Wert für den Reduktionswert r auf. Dieser ist geführt über ein Vergleichsglied 85, welches bestimmt, ob der Wert r über oder unter 100% liegt. Liegt er darunter, so wird ein entsprechendes Signal an das UND-Glied 86 ausgegeben. Ein dritter Eingang des UND-Glieds 86 ist ein Statuswert für den Zustand der Windenergieanlage 1 angelegt. Ist die Windenergieanlage 1 dem Statussignal nach voll betriebsfähig ohne Einschränkung (Status 0 bzw. o.k.), so ist dieser Wert aktiv. Das UND-Glied 86 prüft, ob an allen Eingängen ein aktives Signal vorliegt. Ist das der Fall, so gibt es an seinen Ausgang 87 ein Freigabesignal aus. Es betätigt ein Freigaberelais 88, welches den von den Pitchaktivitätsdetektor erzeugten Ausgangszustand durchschaltet. Es wird dann von der Auswerteeinrichtung 6 ein Signal "E" ausgegeben am Ausgang 89, wonach eine Reduktion von Extern vorliegt.

Optional kann er eine weitere Auswertung auf Beschränkungen aufgrund interner Bedingungen, insbesondere einem Warnungs- oder Störungszustände der Windenergieanlage 1 erfolgen. Hierzu ist ein weiteres UND-Glied 91 vorgesehen, an dessen einen Eingang das Ausgangssignal des Pitchdetektors 7 angelegt ist. An dessen anderen Eingang ist invertierte Statussignal 80 angelegt, welches über einen Inverter 90 geführt ist. Der Ausgang des Inverters 90 ist dann aktiv, wenn ein Störungs- oder Warnungszustand an der Windenergieanlage 1 vorliegt. Damit wird das vom Pitchdetektor 7 ermittelte Pitchaktivitätssignal freigeschaltet, dass bedeutet, dass eine Reduktion der Windenergieanlage 1 vorliegt, und zwar bedingt durch interne Faktoren (Signal "I").

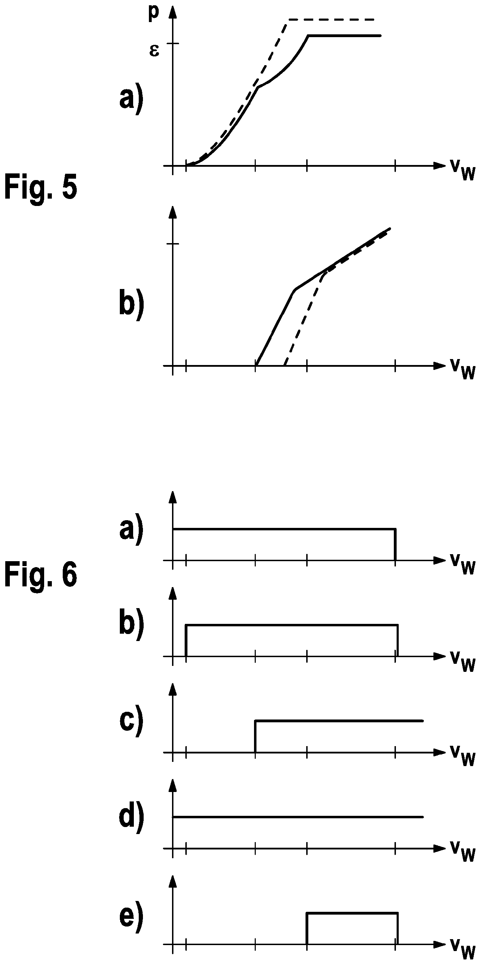

Die Wirkung des erfindungsgemäßen Verfahrens wird nunmehr unter Bezugnahme auf die Fig. 5 und 6 beschrieben. Fig. 5a zeigt mit gestrichelter Linie den Verlauf der abgegebenen Leistung bei einer unbeschränkt, das heißt ohne Reduktionen betriebenen Windenergieanlage. Auf der Abszisse ist die Windgeschwindigkeit abgetragen und auf der Ordinate die abgegebene Wirkleistung. Im linken Bereich erkennt man einen parabelartigen Anstieg der Wirkleistung bei steigender Windgeschwindigkeit, bis etwa in der Bildmitte die Nennleistung erreicht wird. Danach steigt die abgegebene Leistung mit weiterer steigender Windstärke nicht mehr an. In Fig. 5b ist der zugehörige Verlauf des Pitchwinkels θ dargestellt. Man erkennt, dass in dem Teillastbereich (also bei Leistungsabgabe kleiner als die Nennleistung) der Pitchwinkel konstant bleibt, während beim Erreichen der Nennleistung der Pitchwinkel verändert wird. Mit durchgezogener Linie sind die entsprechenden Verläufe für eine Windenergieanlage 1 dargestellt, welche mit einer Leistungsreduktion betrieben wird. Die Leistungsreduktion fußt vorliegend auf zwei Ursachen, zum einen lärmreduzierter Betrieb bei Teillast und reduzierte Leistungsabgabe bei Volllast. Hierbei verläuft bei ansteigendem Wind der Anstieg der abgegebenen Leistung anfänglich wie bei der nicht reduzierten Windenergieanlage (gestrichelte Linie), weicht jedoch bei größerer Windgeschwindigkeit ab. Der dazugehörende Pitchwinkelverlauf ist in Fig. 5b dargestellt. Man erkennt, dass anfänglich wiederum der Pitchwinkel konstant naher der Nulllinie verbleibt, jedoch beginnt nunmehr wesentlich früher die Pitchaktivität und der Pitchwinkel Nulllinie und steigt an. In diesem Bereich fängt die Windenergieanlage 1 an, durch Verändern des Pitchwinkels nicht mehr die gesamte aus dem Wind an sich verfügbare aerodynamische Leistung am Windrotor 12 aufzunehmen, sondern sie lässt Teile der Windleistung ungenutzt durchstreichen. Auf diese Weise wird die erwünschte Leistungsreduktion erreicht.

Verschiedene Parameter, welche bei der erfindungsgemäßen Verfahren zur Detektion des Wirksamwerdens der Reduktion verwendet werden, sind in Fig. 6 dargestellt. In Fig. 6a ist dargestellt, ob ein Reduktionswert vorliegt, der von übergeordneter Instanz angelegt ist. In Fig. 6b ist dargestellt, inwieweit die Windenergieanlage im Teillastbetrieb läuft, wie es durch die Entscheidungsstelle 105 bestimmt wird. Das Signal gibt einen Wert von 1 an, wenn Teillastbetrieb vorliegt. In Fig. 6c ist dargestellt, ob eine Pitchaktivität vorliegt. Unter Pitchaktivität wird hierbei verstanden, dass der Pitchwinkel die Nulllinie, welche hier den Referenzwert bildet, verlassen hat. In Fig. 6d ist der Status der Windenergieanlage dargestellt. Der normale Betrieb ohne Einschränkungen seitens der Windenergieanlage aufgrund von Störungen oder Warnzustanden ist durch den Status Ok-aktiv gekennzeichnet. Anhand dieser Parameter wird durch das erfindungsgemäße Verfahren bestimmt, ab wann die während der gesamten Zeit vorgegebene Reduktion überhaupt wirksam wird. Dies ist in Fig. 6e dargestellt. Man erkennt, dass die Reduktion anfänglich bei noch geringer Windstärke nicht wirksam ist, sondern erst dann wirksam wird, wenn die Windstärke einen bestimmten Wert erreicht hat. Ist das der Fall, sodass die Reduktion sich ertragswirksam auf die Leistungsproduktion der Windenergieanlage (negativ) auswirkt, so wird das Signal "E" gesetzt. Damit kann eindeutig bestimmt werden, wann die von einer übergeordneten Instanz vorgegeben Reduktion wirksam war.

Es sei angemerkt, dass das erfindungsgemäße Verfahren sich sowohl zur Ausführung im Live-Betrieb bei laufender Windenergieanlage eignet, als auch zur Ausführung offline, insbesondere im Nachhinein anhand von aufgezeichneten Protokolldaten. Ferner eignet sich das erfindungsgemäße Verfahren sowohl zur Anwendung lokal an der Windenergieanlage, wie auch zentral im Parkmaster oder dezentral an einem vollkommen anderen Ort, soweit dieser vollkommen andere Ort über die entsprechenden Protokolldaten (sei es im Live-Betrieb oder als gespeicherte Daten) verfügt. Letzteres kann beispielsweise durch handelsübliche SCADA-Systeme realisiert sein.

## Patentansprüche

1. Verfahren zum Überwachen des Betriebs einer Windenergieanlage (1), die einen von einem Windrotor (12) mit mindestens einem Rotorblatt (13), dessen Pitchwinkel (θ) verstellbar ist, angetriebenen Generator (15) zur Abgabe elektrischer Leistung aufweist, wobei die Windenergieanlage (1) mit einem von extern vorgebbaren Leistungsreduktionssollwert (r) betrieben werden kann,
**gekennzeichnet durch**
ein Bestimmen, ob die Windenergieanlage (1) reduziert betrieben wird oder nicht, mit den Schritten:
I. Bestimmen, ob eine Veränderung eines Windrotorbetriebsparameters, ausgewählt aus einer Gruppe bestehend aus einer Drehzahl des Windrotors und dem Pitchwinkel (θ), gegenüber einem Referenzwert (θ_{ref}) vorliegt,
II. Bestimmen, ob die Windenergieanlage (1) in einem Teillastbetrieb läuft,
III. Prüfen, ob ein Leistungsreduktionssollwert vorgegeben ist, und
IV. Bereitstellen eines Signals für eine wirksame Reduktion ("E") dann, wenn alle vorgenannten Bedingungen erfüllt sind.

2. Verfahren nach Anspruch 1, **gekennzeichnet durch** ein zusätzliches Erfassen eines Volllastbetriebs mit den Schritten:
I. Bestimmen, ob ein Volllastbetrieb vorliegt,
II. Prüfen, ob ein Leistungsreduktionssollwert anliegt, und
III. Ausgeben des Signals ("R") für eine wirksame Reduktion dann, wenn beide Bedingungen erfüllt sind.

3. Verfahren nach Anspruch 1 oder 2, **gekennzeichnet durch** Ausgeben eines alternativen Ausgangssignal ("I") im Fall eines erkannten Störungs- oder Warnungszustands der Windenergieanlage (1).

4. Verfahren nach einem der vorangehenden Ansprüche, **dadurch gekennzeichnet, dass** als Referenzwert ein Pitch-Sollwert für leistungsoptimalen Betrieb verwendet wird.

5. Verfahren nach einer der Ansprüche 1 bis 3, **dadurch gekennzeichnet, dass** als Referenzwert ein Drehzahl-Sollwert für optimalen Betrieb verwendet wird.

6. Verfahren nach Anspruch 4 oder 5, **dadurch gekennzeichnet, dass** der Sollwert für optimalen Betrieb anhand einer Kennlinie für höchsten Leistungsertrag bestimmt ist.

7. Verfahren nach Anspruch 4 oder 5, **dadurch gekennzeichnet, dass** der Sollwert für optimalen Betrieb anhand einer Kennlinie für lärmarmen Betrieb bestimmt wird.

8. Verfahren nach einem dem Ansprüche 4 bis 7, **dadurch gekennzeichnet, dass** der Sollwert durch eine Feinpitchregelung modifiziert wird, und der modifizierte Wert den Referenzwert bildet.

9. Verfahren nach einem der vorangehenden Ansprüche, **dadurch gekennzeichnet, dass** ein Schwellwertfaktor (ε) zur Abgrenzung von Volllastbetrieb und Teillastbetrieb verwendet wird, wobei der Schwellwertfaktor (ε) in einen Bereich zwischen 90 bis 99%, vorzugsweise 92 bis 97%, der Nennleistung der Windenergieanlage (1) liegt.

10. Verfahren nach einem der vorangehenden Ansprüche, **dadurch gekennzeichnet, dass** es im laufenden Betrieb ausgeführt wird.

11. Verfahren nach einem der Ansprüche 1 bis 9, **dadurch gekennzeichnet, dass** es anhand aufgezeichneter Daten ausgeführt wird.

12. Verfahren nach einem der vorangehenden Ansprüche, **dadurch gekennzeichnet, dass** das Verfahren an einem von der Windenergieanlage (1) entfernten Ort durchgeführt wird.

13. Windenergieanlage mit einem von einem Windrotor (12) mit mindestens einem Rotorblatt (13), dessen Pitchwinkel verstellbar ist, angetriebenen Generator (15) zur Abgabe elektrischer Leistung, wobei die Windenergieanlage den Eingang für einen von extern vorgebbaren Leistungsreduktionssollwert r aufweist, ist eine Auswerteeinrichtung vorgesehen,
**dadurch gekennzeichnet, dass**
die Auswerteeinrichtung dazu ausgebildet ist zu bestimmten, ob die Windenergieanlage (1) reduziert betrieben wird oder nicht, wobei die Auswerteinrichtung
einen Pitchaktivitätsdetektor (7) aufweist, der dazu ausgebildet ist zu bestimmen, ob eine Veränderung eines Windrotorbetriebsparameters, ausgewählt aus einer Gruppe bestehend aus einer Drehzahl des Windrotors und dem Pitchwinkel (θ), gegenüber einem Referenzwert (θ_{ref}) vorliegt;
eine Lastwaage (8), die dazu ausgebildet ist zu bestimmen, ob die Windenergieanlage (1) in einem Teillastbetrieb läuft, und zu prüfen, ob ein Leistungsreduktionssollwert vorgegeben ist; sowie
eine Einrichtung zur Freigabe (86, 88) umfasst, die dazu ausgebildet ist dann, wenn alle vorgenannten Bedingungen erfüllt sind, ein Signal für eine wirksame Reduktion ("E") bereitzustellen.

14. Windenergieanlage nach Anspruch 13, **dadurch gekennzeichnet, dass** die Auswerteeinrichtung weiter dazu ausgebildet ist, das Verfahren nach einem der Ansprüche 2 bis 12 auszuführen.

## Claims

1. Method for monitoring the operation of a wind energy installation (1) having a generator (15) which is driven by a wind rotor (12) having at least one rotor blade (13), the pitch angle (θ) of which is adjustable, and is intended to output electrical power, wherein the wind energy installation (1) can be operated with an externally predefinable power reduction desired value (r),
**characterized by**
determining whether or not the wind energy installation (1) is operated in a reduced manner, having the steps of:
I. determining whether there is a change in a wind rotor operating parameter, selected from a group consisting of a speed of the wind rotor and the pitch angle (θ), in comparison with a reference value (θ_{ref}),
II. determining whether the wind energy installation (1) is operating with a partial load,
III. checking whether a power reduction desired value has been predefined, and
IV. providing a signal for an effective reduction ("E") when all of the above-mentioned conditions have been met.

2. Method according to Claim 1, **characterized by** additionally capturing full-load operation, with the steps of:
I. determining whether there is full-load operation,
II. checking whether a power reduction desired value is applied, and
III. outputting the signal ("R") for an effective reduction when both conditions have been met.

3. Method according to Claim 1 or 2, **characterized by** outputting an alternative output signal ("I") in the event of a detected fault or warning state of the wind energy installation (1).

4. Method according to one of the preceding claims, **characterized in that** a pitch desired value is used as the reference value for power-optimized operation.

5. Method according to one of Claims 1 to 3, **characterized in that** a speed desired value is used as the reference value for optimum operation.

6. Method according to Claim 4 or 5, **characterized in that** the desired value for optimum operation is determined on the basis of a characteristic curve for the highest power output.

7. Method according to Claim 4 or 5, **characterized in that** the desired value for optimum operation is determined on the basis of a characteristic curve for low-noise operation.

8. Method according to one of Claims 4 to 7, **characterized in that** the desired value is modified by means of fine pitch control, and the modified value forms the reference value.

9. Method according to one of the preceding claims, **characterized in that** a threshold value factor (ε) is used to differentiate full-load operation and partial-load operation, wherein the threshold value factor (ε) is in a range of 90 to 99%, preferably 92 to 97%, of the nominal power of the wind energy installation (1).

10. Method according to one of the preceding claims, **characterized in that** it is carried out during ongoing operation.

11. Method according to one of Claims 1 to 9, **characterized in that** it is carried out on the basis of recorded data.

12. Method according to one of the preceding claims, **characterized in that** the method is carried out at a location remote from the wind energy installation (1).

13. Wind energy installation having a generator (15) which is driven by a wind rotor (12) having at least one rotor blade (13), the pitch angle of which is adjustable, and is intended to output electrical power, wherein the wind energy installation has the input for an externally predefinable power reduction desired value r, an evaluation device is provided,
**characterized in that**
the evaluation device is designed to determine whether or not the wind energy installation (1) is operated in a reduced manner, wherein the evaluation device
has a pitch activity detector (7) which is designed to determine whether there is a change in a wind rotor operating parameter, selected from a group consisting of a speed of the wind rotor and the pitch angle (θ) , in comparison with a reference value (θ_{ref});
a load balance (8) which is designed to determine whether the wind energy installation (1) is operating with a partial load and to check whether a power reduction desired value has been predefined; and
comprises a release device (86, 88) which is designed to provide a signal for an effective reduction ("E") when all of the above-mentioned conditions have been met.

14. Wind energy installation according to Claim 13, **characterized in that** the evaluation device is also designed to carry out the method according to one of Claims 2 to 12.

## Revendications

1. Procédé de surveillance du fonctionnement d'une éolienne (1) qui présente un générateur (15) entraîné par un rotor d'éolienne (12) comprenant au moins une pale de rotor (13), dont l'angle de pas (θ) peut être varié, pour fournir de la puissance électrique, l'éolienne (1) pouvant fonctionner avec une valeur de consigne de réduction de puissance (r) prédéfinissable depuis l'extérieur,
**caractérisé par**
une étape pour déterminer si l'éolienne (1) fonctionne en mode réduit ou non, comprenant les étapes consistant à :
I. Déterminer s'il se produit une variation d'un paramètre de fonctionnement du rotor d'éolienne, choisi parmi un groupe constitué d'une vitesse de rotation du rotor d'éolienne et de l'angle de pas (θ), par rapport à une valeur de référence (θ_{ref}),
II. Déterminer si l'éolienne (1) fonctionne en mode de charge partielle,
III. Vérifier si une valeur de consigne de réduction de puissance est prédéfinie, et
IV. Fournir un signal pour une réduction ("E") effective lorsque toutes lesdites conditions sont satisfaites.

2. Procédé selon la revendication 1, **caractérisé par** une détection supplémentaire d'un mode de fonctionnement à pleine charge, comprenant les étapes consistant à :
I. Déterminer s'il se produit un fonctionnement à pleine charge,
II. Vérifier si une valeur de consigne de réduction de puissance s'applique, et
III. Emettre le signal ("R") pour une réduction effective lorsque les deux conditions sont satisfaites.

3. Procédé selon la revendication 1 ou 2, **caractérisé par** l'émission d'un signal de sortie alternatif ("I") dans le cas de la détection d'un état de perturbation ou d'avertissement de l'éolienne (1).

4. Procédé selon l'une quelconque des revendications précédentes, **caractérisé en ce que** l'on utilise en tant que valeur de référence une valeur de consigne de pas pour un mode de fonctionnement à puissance optimale.

5. Procédé selon l'une des revendications 1 à 3, **caractérisé en ce qu'**une valeur de consigne de vitesse de rotation est utilisée en tant que valeur de référence pour un fonctionnement optimal.

6. Procédé selon la revendication 4 ou 5, **caractérisé en ce que** la valeur de consigne pour un mode de fonctionnement optimal est déterminée à l'aide d'une courbe caractéristique pour un rendement maximum.

7. Procédé selon la revendication 4 ou 5, **caractérisé en ce que** la valeur de consigne pour un mode de fonctionnement optimal est déterminée à l'aide d'une courbe caractéristique pour un fonctionnement peu bruyant.

8. Procédé selon l'une quelconque des revendications 4 à 7, **caractérisé en ce que** la valeur de consigne est modifiée par une régulation de pas fine, et la valeur modifiée constitue la valeur de référence.

9. Procédé selon l'une quelconque des revendications précédentes, **caractérisé en ce qu'**un facteur de valeur seuil (ε) est utilisé pour limiter le fonctionnement à pleine charge et le fonctionnement à charge partielle, le facteur de valeur seuil (ε) étant situé dans une plage comprise entre 90 et 99 %, de préférence entre 92 et 97 %, de la puissance nominale de l'éolienne (1) .

10. Procédé selon l'une quelconque des revendications précédentes, **caractérisé en ce qu'**il est mis en oeuvre pendant le fonctionnement en continu.

11. Procédé selon l'une quelconque des revendications 1 à 9, **caractérisé en ce qu'**il est mis en oeuvre à l'aide de données enregistrées.

12. Procédé selon l'une quelconque des revendications précédentes, **caractérisé en ce que** le procédé est mis en oeuvre à un emplacement éloigné de l'éolienne (1).

13. Éolienne comprenant un générateur (15) entraîné par un rotor d'éolienne (12) avec au moins une pale de rotor (13), dont l'angle de pas peut être varié, pour fournir de la puissance électrique, l'éolienne présentant l'entrée pour une valeur de consigne de réduction de puissance r prédéfinissable depuis l'extérieur, est prévu un dispositif d'analyse,
**caractérisée en ce que**
le dispositif d'analyse est réalisé pour déterminer si l'éolienne (1) fonctionne en mode réduit ou pas, le dispositif d'analyse présentant un détecteur d'activité de pas (7) qui est réalisé de manière à déterminer s'il se produit une variation d'un paramètre de fonctionnement du rotor d'éolienne, choisi parmi un groupe constitué d'une vitesse de rotation du rotor d'éolienne et de l'angle de pas (θ), par rapport à une valeur de référence (θ_{ref}) ;
comprend une balance de charge (8) qui est réalisée pour déterminer si l'éolienne (1) fonctionne en mode de charge partielle et pour vérifier si une valeur de consigne de réduction de puissance est prédéfinie ; et
un dispositif de libération (86, 88) qui est réalisé de manière à fournir un signal pour une réduction effective ("E") lorsque toutes les conditions susmentionnées sont satisfaites.

14. Éolienne selon la revendication 13, **caractérisée en ce que** le dispositif d'analyse est en outre réalisé pour mettre en oeuvre le procédé selon l'une quelconque des revendications 2 à 12.
